# EUROPÄISCHE PATENTANMELDUNG

(11) **EP 0 966 008 A2**
(43) Veröffentlichungstag der Anmeldung: **22.12.1999**
(21) Anmeldenummer: 99107234.9
(22) Anmeldetag: 14.04.1999
(51) Int. Cl.: H01G 9/045

(54) **Verfahren zur Herstellung einer Anode für elektrolytische Kondensatoren, solchermassen hergestellte Anode und eine solche Anode aufweisender Kondensator**

(30) Priorität: 20.04.1998 DE 19817405
(71) Anmelder: Becromal S.p.A., I-20089 Quinto de' Stampi Rozzano (MI) (IT)
(72) Erfinder: Chiavarotti, Giovanni Pietro, 20152 Milano (IT); Sunseri, Carmelo, 90129 Palermo (IT); Di Quarto, Francesco, 90011 Bagheria (PA) (IT); Santamaria, Monica, 92027 Licata (AG) (IT)
(74) Vertreter: KEIL & SCHAAFHAUSEN

(57) **Zusammenfassung**

Die Erfindung bezieht sich auf ein Verfahren zur Herstellung einer Anode für elektrolytische Kondensatoren aus einer Aluminiumfolie als Substrat, auf welches eine Legierung aus Aluminium und einem weiteren Metall, dessen Oxid eine höhere Dielektrizitätskonstante als Aluminiumoxid aufweist, zur Erhöhung der Oberflächenrauhigkeit in mehreren Verfahrensschritten bei unterschiedlichen Einfallswinkeln im Vakuum unter Bildung einer porösen Schicht aufgedampft und einer anschließenden anodischen Oxidation unterworfen wird, sowie eine solchermaßen hergestellte Anode und einen eine solche Anode aufweisenden elektrolytischen Kondensator.

## Beschreibung

Die Erfindung bezieht sich auf ein Verfahren zur Herstellung einer Anode für elektrolytische Kondensatoren sowie auf in solcher Weise hergestellte Anoden.

Für einen Kondensator aus zwei mittels eines Dielektrikums vorgegebener Stärke getrennte Metallplatten hängt die Kapazität von der Dielektrizitätskonstante des Dielektrikums, der Vakuumdielektrizität, der geometrischen Fläche sowie dem Abstand der Metallplatten ab. Um zu höheren Kapazitätswerten bei vorgegebener Fläche zu kommen, kann die Dicke des Dielektrikums verringert, die wirksame Oberfläche der Metallplatten durch Aufrauhen vergrößert und ein Dielektrikum mit höherer Dielektrizitätskonstante verwendet werden. Die Dicke des Dielektrikums ist hauptsächlich von dem Wert der Betriebsspannung, bei welcher der Kondensator betrieben werden soll, abhängig, also für eine bestimmte Betriebsspannung praktisch konstant.

Es ist bekannt, daß Aluminiumoxid im Vergleich mit anderen Metalloxiden aufgrund der Tatsache erhebliche Vorteile aufweist, dass aus einer Aluminiumfolie anodisch unter elektrochemischen Ätzen Filme unter Bildung von Aluminiumoxid mit guten Isolationseigenschaften und mit großer Rauhigkeit erzeugt werden können, so daß sehr hohe Kapazitätswerte trotz der verhältnismäßig niedrigen Dielektrizitätskonstanten von Aluminiumoxid im Vergleich zu anderen Metalloxiden, wie solchen von Titan oder Tantal, erreicht werden können.

Aus der GB-B-2 056 503 ist ein Verfahren zur Herstellung eines elektrolytischen Kondensators bekannt, bei welchem ein flexibles Substrat mit einer Oberfläche verwendet wird, welchem ein anodisierbares Metall aufgedampft wird. Das Aufdampfen erfolgt unter einem Einfallswinkel von weniger als 60° in Anwesenheit von Sauerstoff und unter einem Partialdruck von nicht mehr als 10⁻⁴ Torr, um eine poröse Metallschicht zu bilden. Anschließend wird die poröse Metallschicht anodisiert und aus derartigen Folien ein Kondensator gewickelt. Das Substrat kann Aluminium und das anodisierbare Metall kann Tantal oder eine Legierung aus zwei oder mehreren Metallen sein.

Aufgabe der vorliegenden Erfindung ist es, ein Verfahren zur Herstellung von Anoden sowie Anoden selbst vorzuschlagen, mit Hilfe welcher auf einfache Weise Kondensatoren höherer Kapazität geschaffen werden können.

Diese Aufgabe wird durch ein Verfahren zur Herstellung einer Anode für elektrolytische Kondensatoren aus einer Aluminiumfolie als Substrat gelöst, auf welches eine Legierung aus Aluminium und einem weiteren Metall, dessen Oxid eine höhere Dielektrizitätkonstante als Aluminiumoxid aufweist, zur Erhöhung der Oberflächenrauhigkeit in mehreren Verfahrensschritten bei unterschiedlichen Einfallswinkeln im Vakuum unter Bildung einer porösen Schicht aufgedampft und einer anschließenden anodischen Oxidation unterworfen wird.

Mit auf diese Weise hergestellten Anoden können wesentlich höhere Kapazitätswerte bei gleicher Anodisationsspannung erzielt werden, als dies bei Verwendung herkömmlicher Aluminiumfolien der Fall ist.

Als Aluminiumlegierung wird vorzugsweise eine solche verwendet, welche ein Ventilmetall, wie Titan, Tantal, Niob, Zirkon oder dgl. aufweist.

Um eine möglichst große Oberfläche der porösen Schicht zu erzielen, wird die Aluminiumlegierung vorzugsweise in drei aufeinanderfolgenden Verfahrensabschnitten mit einem Metalldampfstrahl aufgedampft. In einem ersten Verfahrensabschnitt zum Aufbau einer ersten dünnen, anhaftenden Schicht mit ersten Kristallisationskernen sollte der Einfallswinkel zwischen dem Metalldampfstrahl und der Oberflächennormalen groß sein, bspw. wenigstens 75°. Um ein optimales Wachsen von Kristallen mit dendritischer Struktur zu ermögichen, sind in einem zweiten Verfahrensabschnitt mittlere Einfallswinkel, bspw. zwischen 40° und 60°, vorgesehen. In einem dritten Verfahrensabschnitt zum Abschluss des Kristallwachstums wird die Aluminiumlegierung unter beliebigen, vorzugsweise jedoch kleinen Einfallswinkeln, bspw. höchstens 40°, aufgedampft.

Vorteilhafterweise wird in einem Verfahrensabschnitt in mehreren Verfahrensschritten mit unterschiedlichen Einfallswinkeln aufgedampft. Insbesondere ist es sinnvoll, in der Einfallsebene Winkel auf beiden Seiten der Oberflächennormale vorzusehen, um ein bezogen auf die Vertikale symmetrisches Anwachsen der Kristalle zu erreichen.

Zur Verbesserung der Stabilität der porösen Schicht kann die Aluminiumlegierung in einem oder mehreren von späteren Verfahrensschnitten unter Zuführung eines Schutzgases, wie bspw. Stickstoff, aufgedampft werden. Dies ist insbesondere während des letzten Verfahrensabschnitts zur Stabilisierung der kristallinen Struktur vorteilhaft.

In Abhängigkeit von den gewünschten Ergebnissen wird die Aluminiumlegierung vorteilhafterweise bei einer Folientemperatur zwischen 50° C und 300° C aufgedampft.

Eine noch weitere Erhöhung der Kapazität kann erreicht werden, wenn die Aluminiumfolie nach dem Bedampfen und Oxidieren einer Wärmebehandlung für eine vorgegebene Zeit von z.B. etwa 1 bis 3 Stunden, z.B. in einer Luft- oder Inertgasatmosphäre, bei einer vorgegebenen erhöhten Temperatur von z.B. etwa 350 bis 500° C unterworfen wird. Als Inertgas kann bspw. Argon dienen.

Mit der Erfindung wird ferner vorgeschlagen, die Aluminiumfolie nach der Temperaturbehandlung einer erneuten Oxidation zu unterwerfen.

Als Substrat eignet sich bspw. eine Aluminiumfolie mit einem Reinheitsgrad von etwa 99,5%.

Gute Werte für die Kapazitäten wurden insbesondere dann erzielt, wenn die Aluminiumlegierung einen Anteil an Ventilmetall von zwischen etwa 20 und 40% enthält.

Zum Erhitzen und Verdampfen von in einem oder mehreren Schmelztiegeln angeordneten Legierungsmetallen wird z.B. ein Elektronenstrahl mit an die jeweiligen Metalle entsprechend anpassbarer Energie verwendet. Auf diese Weise wird eine gleichmäßige Ablagerung der Legierung auf der Aluminiumfolie erreicht.

Die Erfindung bezieht sich auch auf Anoden, welche nach dem zuvor erörterten Verfahren hergestellt worden sind, sowie auf elektrolytische Kondensatoren mit derartigen Anoden.

In der anschließenden Tabelle sind die Ergebnisse von Vergleichsversuchen für Aluminiumfolien herkömmlicher Art und erfindungsgemäße Aluminiumfolien mit Al-Ti- bzw. Al-Ta-Legierungsbeschichtung wiedergegeben, wobei die Legierungen bei konstanter Zuwachsrate unter denselben experimentellen Bedingungen und unter der gleichen Endspannung Vf=22V anodisiert wurden. Man sieht, daß größere Kapazitätswerte für Aluminiumfolien mit Al-Ta-Legierungsbeschichtung bzw. Al-Ti-Legierungsbeschichtungen erzielt wurden, wobei der Tantalgehalt bei etwa 35% und der Titan-Gehalt bei etwa 20 bis 40% lag. Erkennbar sind auch die noch höheren Kapazitätswerte, welche an Proben nach der Wärmebehandlung gemessen wurden. Dabei ergibt sich zum Teil eine Verdoppelung der Kapazitätswerte.

Eine physiko-chemische Untersuchung der Dielektrizitätsfilme mittels Photostrom und elektrochemischer Impedanzspektrometrie ergab, daß die gemischten Oxidfilme sich wie Isolatoren mit verhältnismäßig großen Bandabständen und mit sehr niedrigen Dielektrizitätsverlusten verhalten. Die großen Bandabstandswerte, die niedrigen dielektrischen Verluste in einem weiten Frequenzbereich (1 bis 1,5 kHz) und eine bessere chemische Stabilität der gemischten Oxide in wässrigen Lösungen im Vergleich zu einem Aluminiumoxid machen die Verwendung als Dielektrika für elektrolytische Kondensatoren besonders geeignet.

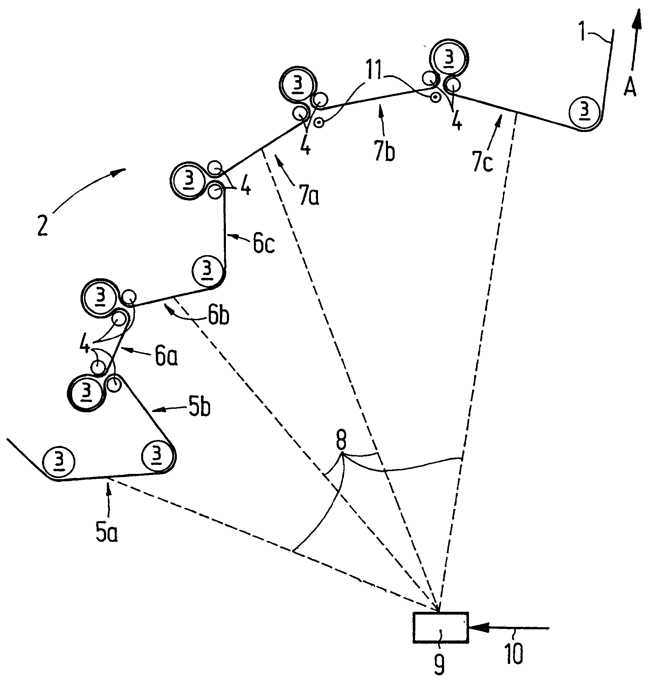

Die einzige Figur zeigt schematisch das Aufdampfen der Aluminiumlegierung auf die Aluminiumfolie anhand eines Ausführungsbeispiels.

Eine Aluminiumfolie 1 ist in eine Führung 2 mit einer Vielzahl von großen Umlenkrollen 3 und kleinen Umlenkrollen 4 eingespannt. zwischen den jeweiligen Umlenkrollen 3, 4 befinden sich ebene Folienabschnitte 5a, 5b, 6a, 6b, 6c und 7a, 7b, 7c, welche jeweils einem Metalldampfstrahl 8 ausgesetzt sind. Der Metalldampfstrahl 8 wird durch Verdampfen der Legierungsmetalle in einem oder mehreren Schmelztiegeln 9 erzeugt. Dazu wird ein Elektronenstrahl 10 so geführt, dass er die Legierungsmetalle in allen Schmelztiegeln 9 gleichzeitig erhitzt, wobei der Elektronenstrahl mit unterschiedlichen Energien auf die verschiedenen Legierungsmetalle treffen kann. Durch eine geeignete Anordnung der Schmelztiegel 9 kann eine gleichmäßige Verteilung der Legierung auf der Aluminiumfolie 1 mit Toleranzen im Bereich von +/- 5% erreicht werden.

Während der Aufdampfens der Legierung wird die Aluminiumfolie 1 in der durch den Pfeil A angezeigte Richtung bewegt, so dass die Aluminiumfolie 1 sämtliche der Folienabschnitte 5 bis 7 durchläuft. In dem aus den Folienabschnitten 5a und 5b bestehenden ersten Verfahrensabschnitt wird in zwei aufeinanderfolgenden Verfahrensschritten eine erste dünne, anhaftende Schicht mit ersten Kristallisationskernen aufgedampft, wobei der Einfallswinkel zwischen dem Metalldampfstrahl 8 und der Oberflächenormalen der Aluminiumfolie 1 jeweils größer als 75° ist. Durch Umlenken der Alumiumfolie 1 mit einer großen Umlenkrolle 3 um etwa 330° zwischen den Folienabschnitten 5a und 5b wird erreicht, dass die Einfallswinkel in der mit der Schnittebene identischen Einfallsebene auf beiden Seiten der Oberflächennormale verteilt sind, um einen symmetrischen Aufbau der Kristallisationskerne zu erreichen. Mit einer weiteren großen Umlenkrolle 3 wird die Folie dem Folienabschnitt 6a zugeführt. Damit die große Umlenkrolle 3 nicht direkt dem Metalldampfstrahl 8 ausgesetzt ist, wird die Aluminiumfolie 1 mit zwei kleinen Umlenkrollen 4 so um die Umlenkrolle 3 herumgeführt, dass diese von der Aluminiumfolie 1 nahezu vollständig umschlossen und dem Metalldampfstrahl 8 nicht ausgesetzt ist.

In dem zweiten Verfahrensabschnitt mit den Folienabschnitten 6a bis 6c (drei Verfahrensschritte) sollen die dendritischen Kristalle wachsen, die den porösen Teil der Schicht bilden. Dazu trifft der Metalldampfstrahl 8 mit mittleren Einfallswinkeln zwischen 40° und 60° auf die Aluminiumfolie 1, damit die Kristalle nicht zu klein werden, da sie sonst während des Aufbaus vollständig oxidieren und nicht an der kapazitiven Struktur teilnehmen. Auch in dem zweiten Verfahrensabschnitt liegen die Einfallswinkel in der Einfallsebene auf beiden Seiten der Oberflächennormalen, weil auf diese Weise die gebildeten Kristalle am größten werden.

Der dritte Verfahrensabschnitt umfasst die Folienabschnitte 6a bis 6c, welche kuppelförmig angeordnet sind. Zwischen den Folienabschnitten 7a und 7b bzw. 7b und 7c befinden sich direkt unterhalb der Aluminiumfolie 1 Gasimissionsöffnungen 11, aus denen in geeigneter Dosierung ein Schutzgas, wie im vorliegenden Ausführungsbeispiel Stickstoff, ausströmt. Der Stickstoff wird von dem Metalldampfstrahl 8 kurz vor dem Aufbringen auf die Aluminiumfolie 1 aufgefangen und überdeckt die dentritischen Kristalle mit einer Nitritschutzschicht, welche die mechanische Stabilität der porösen Schicht erhöht.

An der Rückseite der Aluminiumfolie 1, welche nicht dem Metalldampfstrahl 8 ausgesetzt ist, sind nicht dargestellte Heizelemente angeordnet, um die Aluminiumfolie 1 auf eine Temperatur zwischen 50°C und 300°C zu erhitzen, bei der die Ausbildung der dendritischen Kristalle bevorzugt erfolgt. Dabei kann über die Umlenkrollen 3, 4 die Aluminiumfolie 1 ggf. gekühlt werden, falls dies für einen Verfahrensabschnitt notwendig sein sollte.

Die Transportgeschwindigkeit der Aluminiumfolie 1, welche auch die Temperatur der Aluminiumfolie beeinflusst, wird so eingestellt, dass die Dicke der porösen Schicht zwischen 0,5 µm und 5 µm liegt.

Mit der erfindungsgemäßen Aufdampfmethode sind Oberflächenver grösserungsfaktoren zwischen 20 und 40 im Vergleich zu einer glatten Aluminiumfolie erzielt worden.

Das erfindungsgemäße Verfahren zur Erzeugung von Anodenfolien für die Herstellung von Elektrolytkondensatoren ist nicht nur vom industriellen Standpunkt sondern auch vom Standpunkt des Umweltschutzes aus gegenüber bekannten Folien vorzuziehen, weil das anfängliche elektrochemische Ätzen, welches mit der Handhabung gefährlicher Chemikalien, großer Mengen an Abwasser und Aluminiumoxid-Pulver verbunden ist, entbehrlich ist.

Durch die aufgrund der Aufdampftechnik erzielte höhere Rauhigkeit, der Verwendung von Legierungen mit Ventilmetallen sowie der der anodischen Oxidation nachfolgenden thermischen Behandlung und nochmaliger anodischer Oxidation werden Aluminiumfolien für Kondensatoren vorgeschlagen, welche eine erhebliche Verbesserung gegenüber der bisherigen Technik darstellen.

### Bezugszeichenliste:

- 1: Aluminiumfolie
- 2: Führung
- 3: große Umlenkrollen
- 4: kleine Umlenkrollen
- 5a, b: Folienabschnitte
- 6a, b, c: Folienabschnitte
- 7a, b, c: Folienabschnitte
- 8: Metalldampfstrahl
- 9: Schmelztiegel
- 10: Elektronenstrahl
- 11: Gasimmissionsöffnungen
- A: Pfeil

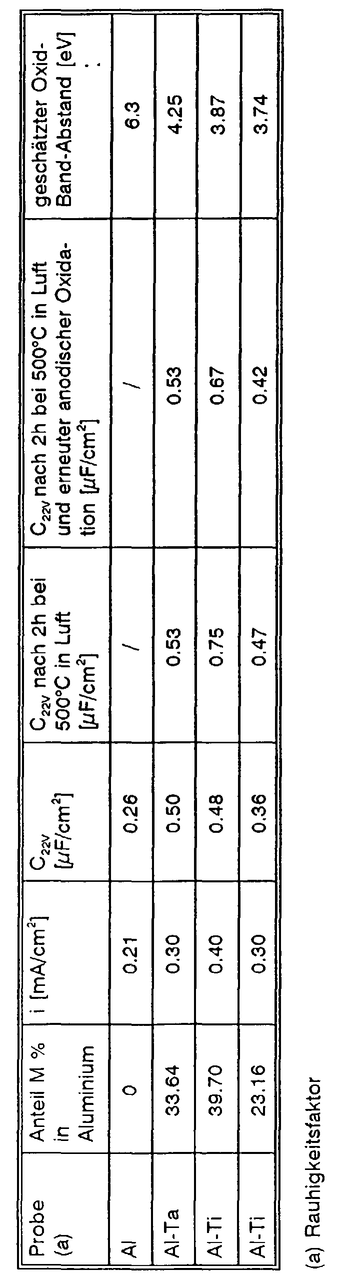

## Patentansprüche

1. Verfahren zur Herstellung einer Anode für elektrolytische Kondensatoren aus einer Aluminiumfolie als Substrat, auf welches eine Legierung aus Aluminium und einem weiteren Metall, dessen Oxid eine höhere Dielektrizitätskonstante als Aluminiumoxid aufweist, zur Erhöhung der Oberflächenrauhigkeit in mehreren Verfahrensschritten bei unterschiedlichen Einfallswinkeln im Vakuum unter Bildung einer porösen Schicht aufgedampft und einer anschließenden anodischen Oxidation unterworfen wird.

2. Verfahren nach Anspruch 1, **dadurch gekennzeichnet**, daß als Aluminiumlegierung eine solche verwendet wird, welche ein Ventilmetall, wie Titan, Tantal, Niob, Zirkon oder dgl., aufweist.

3. Verfahren nach Anspruch 1 oder 2, **dadurch gekennzeichnet**, dass die Aluminiumlegierung zur Ausbildung der porösen Schicht in einem ersten Verfahrensabschnitt mit einem Metalldampfstrahl unter großen Einfallswinkeln zwischen dem Metalldampfstrahl und der Oberflächennormalen, bspw. wenigstens 75°, in einem zweiten Verfahrensabschnitt unter mittleren Einfallswinkeln, bspw. zwischen 40° und 60°, und in einem dritten Verfahrensabschnitt unter beliebigen, vorzugsweise aber kleinen Einfallswinkeln, bspw. höchstens 40°, aufgedampft wird.

4. Verfahren nach Anspruch 3, **dadurch gekennzeichnet**, dass in einem Verfahrensabschnitt in mehreren Verfahrensschritten unter unterschiedlichen Einfallswinkeln aufgedampft wird.

5. Verfahren nach Anspruch 3 oder 4, **dadurch gekennzeichnet**, dass die Aluminiumlegierung in einem oder mehreren von späteren Verfahrensschritten unter Zuführung eines Schutzga ses, bspw. Stickstoff, aufgedampft wird.

6. Verfahren nach einem der vorhergehenden Ansprüche, **dadurch gekennzeichnet**, dass die Aluminiumlegierung bei einer Folientemperatur zwischen 50° C und 300° C aufgedampft wird.

7. Verfahren nach einem der vorhergehenden Ansprüche, **dadurch gekennzeichnet**, daß die Aluminiumfolie nach dem Bedampfen und Oxidieren einer Wärmebehandlung für eine vorgegebene Zeit von z.B. etwa 1 - 3 Stunden, z.B. in einer Luft- oder in Inertgasatmosphäre, bei einer vorgegebenen erhöhten Temperatur von z.B. etwa 350 - 500° C unterworfen wird.

8. Verfahren nach Anspruch 7**, dadurch gekennzeichnet**, daß die Aluminiumfolie nach der Temperaturbehandlung einer erneuten anodischen Oxidation unterworfen wird.

9. Verfahren nach einem der vorhergehenden Ansprüche, **dadurch gekennzeichnet**, daß als Substrat eine Aluminiumfolie mit einem Reinheitsgrad von etwa 99,5% verwendet wird.

10. Verfahren nach einem der vorhergehenden Ansprüche, **dadurch gekennzeichnet**, daß eine Aluminiumlegierung mit einem Anteil des weiteren Metalls, wie des Ventilmetalls, von z.B. zwischen etwa 20 und 40%, verwendet wird.

11. Verfahren nach einem der vorhergehenden Ansprüche, **dadurch gekennzeichnet**, dass zum Erhitzen und Verdampfen von in einem oder mehreren Schmelztiegeln angeordneten Legierungsmetallen ein Elektronenstrahl mit an die jeweiligen Metalle anpasssbarer Energie verwendet wird.

12. Anode für elektrolytische Kondensatoren mit einer Aluminiumfolie als Substrat, auf welches eine Legierung aus Aluminium und einem weiteren Metall, dessen Oxid eine höhere Dielektrizitätskonstante als Aluminiumoxid aufweist, zur Erhöhung der Oberflächenrauhigkeit in mehreren Verfahrensschnitten bei unterschiedlichen Einfallswinkeln im Vakuum unter Bildung einer porösen Schicht aufgedampft und dann einer anodischen Oxidation unterworfen worden ist.

13. Anode nach Anspruch 12, **dadurch gekennzeichnet**, daß die Aluminiumlegierung ein Ventilmetall wie Titan, Tantal, Niob, Zirkon oder dgl., aufweist.

14. Anode nach Anspruch 12 oder 13, **dadurch gekennzeichnet**, dass die Aluminiumlegierung zur Ausbildung der porösen Schicht in einem ersten Verfahrensabschnitt mit einem Metalldampfstrahl unter großen Einfallswinkeln zwischen dem Metalldampfstrahl und der Oberflächennormalen, bspw. wenigstens 75°, in einem zweiten Verfahrensabschnitt unter mittleren Einfallswinkeln, bspw. zwischen 40° und 60°, und in einem dritten Verfahrensabschnitt unter beliebigen, vorzugsweise aber kleinen Einfallswinkeln, bspw. höchstens 40°, aufgedampft worden ist.

15. Anode nach Anspruch 14, **dadurch gekennzeichnet**, dass die Aluminiumlegierung während eines Verfahrensabschnitts in mehreren Verfahrensschritten mit unterschiedlichen Einfallswinkeln aufgedampft worden ist.

16. Anode nach Anspruch 14 oder 15, **dadurch gekennzeichnet**, dass die Aluminiumlegierung in einem oder mehreren von späteren Verfahrensschritten unter Zuführung eines Schutzgases, bspw. Stickstoff, aufgedampft worden ist.

17. Anode nach einem der Ansprüche 12 bis 16, **dadurch gekennzeichnet**, dass die Aluminiumlegierung bei einer Folientemperatur zwischen 50° C und 300° C aufgedampft worden ist.

18. Anode nach einem der Ansprüche 12 bis 17, **dadurch gekennzeichnet**, daß die Aluminiumfolie nach dem Bedampfen und Oxidieren einer Wärmebehandlung für eine vorgegebene Zeit von z.B. etwa 1 bis 3 Stunden, z.B. in einer Luft- oder Inertgasatmosphäre, bei einer vorgegebenen erhöhten Temperatur von z.B. etwa 350 bis 500° C unterworfen worden ist.

19. Anode nach Anspruch 18, **dadurch gekennzeichnet**, daß die Aluminiumfolie nach der Temperaturbehandlung einer weiteren anodischen Oxidation unterworfen worden ist.

20. Anode nach einem der Ansprüche 12 bis 19, **dadurch gekennzeichnet**, daß die als Substrat dienende Aluminiumfolie einen Reinheitsgrad von etwa 99,5% hat.

21. Anode nach einem der Ansprüche 12 bis 20, **dadurch gekennzeichnet**, daß die Aluminiumlegierung einen Anteil des weiteren Metalls, wie des Ventilmetalls, von z.B. von zwischen etwa 20 und 40% enthält.

22. Anode nach einem der Ansprüche 12 bis 21, **dadurch gekennzeichnet**, dass die Legierungsmetalle mittels eines Elektronenstrahls mit an die jeweiligen Metalle entsprechend anpassbarer Energie erhitzt und verdampft worden sind.

23. Elektrolytischer Kondensator, **dadurch gekennzeichnet**, dass er eine Anode nach einem der Ansprüche 12 bis 22 aufweist.
